# EUROPÄISCHE PATENTSCHRIFT

(11) **EP 3 379 228 B1**
(45) Veröffentlichungstag und Bekanntmachung des Hinweises auf die Patenterteilung: **07.06.2023**
(21) Anmeldenummer: 17161873.9
(22) Anmeldetag: 20.03.2017
(51) Int. Cl.: G01N 1/22, G01N 1/40

(54) **GASENTNAHMESONDE, GASBEHÄLTER MIT EINER SOLCHEN GASENTNAHMESONDE SOWIE EIN VERFAHREN ZUR ENTNAHME EINER GASPROBE MIT EINER SOLCHEN GASENTNAHMESONDE**
GAS OFFTAKE PROBE, GAS TANK WITH SUCH A GAS OFFTAKE PROBE AND A METHOD FOR COLLECTING A GAS PROBE WITH SUCH A GAS OFFTAKE PROBE
SONDE DE PRÉLÈVEMENT DE GAZ, RÉCIPIENT DE GAZ COMPRENANT UNE TELLE SONDE DE PRÉLÈVEMENT DE GAZ ET PROCÉDÉ DE PRÉLÈVEMENT D'UN ÉCHANTILLON GAZEUX À L'AIDE D'UNE TELLE SONDE

(43) Veröffentlichungstag der Anmeldung: 26.09.2018
(60) Teilanmeldung: 23155163.1
(73) Patentinhaber: M & C TechGroup Germany GmbH, 40885 Ratingen (DE)
(72) Erfinder: Rumm, Hans-Jörg, 40145 Oberhausen (DE)
(74) Vertreter: Berkenbrink, Kai-Oliver

(56) Entgegenhaltungen:
- EP-A1- 1 324 034
- CN-A- 103 149 059
- US-A- 5 142 143
- US-A1- 2005 084 976
- US-A1- 2009 084 199
- US-A1- 2011 016 950
- US-A1- 2012 261 569
- US-A1- 2012 270 334

## Beschreibung

Die Erfindung betrifft eine Gasentnahmesonde, einen Gasbehälter mit einer solchen daran befestigten Gasentnahmesonde sowie ein Verfahren zur Entnahme einer Gasprobe aus einem Gas eines Gasbehälters mittels einer solchen Gasentnahmesonde.

Gasentnahmesonden dienen zur Entnahme einer Gasprobe aus einem Gas, das insbesondere in einem Gasbehälter vorhanden sein kann. Die entnommene Gasprobe kann anschließend einer Analyse zugeführt werden. Beispielsweise kann die Analyse dazu dienen, bestimmte Substanzen im Gas qualitativ und/oder quantitativ zu bestimmen. Bei diesen Substanzen kann es sich beispielsweise um umwelt- oder gesundheitsgefährdende Substanzen handeln.

Gasentnahmesonden können eine Gasleitung aufweisen, in der ein Gaskanal ausgebildet ist, durch den ein Gas strömen kann. Die Gasleitung kann einen Gaseinlass aufweisen, durch den ein Gas in den Gaskanal einleitbar ist. Zur Entnahme einer Gasprobe aus Gas mittels einer solchen Gasentnahmesonde wird die Gasleitung der Gasentnahmesonde derart in ein Gas eingeführt, dass Gas durch den Gaseinlass in den Gaskanal einströmen kann. Das in den Gaskanal einströmende Gas dient als Gasprobe, das anschließend wie vorstehend analysiert werden kann.

Es ist bekannt, z.B. von US2012/261569A1, EP1324034A1, US5142143A, CN103149059A, US2012/270334A1, US2011/016950A1, oder von US2009/084199A1, Adsorptionsmaterial im Gaskanal einer solch gattungsgemäßen Gasentnahmesonde anzuordnen. Durch dieses Adsorptionsmaterial können zu analysierende Substanzen des Gases adsorbiert werden. Hierzu wird das Adsorptionsmaterial im Bereich des Gaseinlasses im Gaskanal angeordnet. Das durch den Gaseinlass in den Gaskanal eingeleitete Gas durchströmt anschließend das Adsorptionsmaterial, wobei Substanzen des Gases vom Adsorptionsmaterial adsorbiert werden.

Zur Analyse der vom Adsorptionsmaterial adsorbierten Substanzen wird die Gasleitung der Gasentnahmesonde aus dem Gas herausgezogen und das Adsorptionsmaterial aus dem Gaskanal im Bereich des Gaseinlasses entnommen. Das entnommene Adsorptionsmaterial kann schließlich hinsichtlich etwaig adsorbierter Substanzen analysiert werden.

Bei dieser Technologie ist es wichtig, dass tatsächlich das gesamte durch den Gaseinlass in den Gaskanal eingeleitete Gas durch das Adsorptionsmaterial strömt. Dies ist insbesondere dann der Fall, wenn der einzige Gaszutritt in den Gaskanal durch den Gaseinlass möglich ist. Um dies zu überprüfen, wird an gattungsgemäßen Gasentnahmesonden regelmäßig eine Dichtigkeitsprüfung durchgeführt. Dabei wird die Gasleitung der Gasentnahmesonde aus dem zu untersuchenden Gas herausgenommen und der Gaseinlass durch einen Stopfen verschlossen. Anschließend wird der Gaskanal durch eine Gaspumpe mit Unterdruck beaufschlagt. Durch Messung des dabei im Gaskanal entstehenden Unterdrucks ist bestimmbar, ob der Gaseinlass den einzig möglichen Gaszutritt in den Gaskanal bildet.

Grundsätzlich haben sich derart ausgebildete Gasentnahmesonden zur Entnahme von Gasproben aus einem Gas bewehrt. Nachteilig ist jedoch, dass die Gasleitung stets aus dem zu analysierenden Gas entfernt werden muss, um das Adsorptionsmaterial aus der Gasleitung entnehmen und hinsichtlich darin etwaig adsorbierter Substanzen analysieren zu können. Ferner ist nachteilig, dass die Gasleitung auch zur Durchführung der Dichtigkeitsprüfung stets aus dem zu analysierenden Gas entfernt werden muss.

Der Erfindung liegt die Aufgabe zugrunde, eine Gasentnahmesonde zur Verfügung zu stellen, bei der die Gasleitung nicht aus einem zu analysierenden Gas entfernt werden muss, um im Gaskanal der Gasleitung angeordnetes Adsorptionsmaterial zu dessen Analyse aus der Gasleitung entnehmen zu können. Eine weitere Aufgabe der Erfindung besteht darin, eine Gasentnahmesonde zur Verfügung zu stellen, bei der die Gasleitung nicht aus einem zu analysierenden Gas entnommen werden muss, um eine Dichtigkeitsprüfung des Gaskanals der Gasleitung durchführen zu können.

Eine weitere Aufgabe der Erfindung besteht darin, einen Gasbehälter mit einer solchen daran befestigten Gasentnahmesonde zur Verfügung zu stellen.

Eine weitere Aufgabe der Erfindung besteht darin, ein Verfahren zur Entnahme einer Gasprobe mit einer solchen Gasentnahmesonde zur Verfügung zu stellen.

Zur Lösung der Aufgabe wird erfindungsgemäß zur Verfügung gestellt eine Gasentnahmesonde, die in Anspruch 1 definiert ist.

Eine Grundidee der Erfindung besteht darin, das Adsorptionsmaterial stromabwärts des Gaseinlasses in dem Gaskanal anzuordnen und gleichzeitig ein Ventil vorzusehen, durch das der Gaskanal zwischen dem Gaseinlass und dem Adsorptionsmaterial absperrbar ist. Dies ermöglicht es zum einen, das Adsorptionsmaterial aus dem Gaskanal zu entnehmen, ohne die Gasleitung zuvor aus dem zu analysierenden Gas entfernen zu müssen. Gleichzeitig ermöglicht dies, eine Dichtigkeitsprüfung des Gaskanals durchzuführen, ohne die Gasleitung zuvor aus dem analysierenden Gas entfernen zu müssen. Vielmehr kann zur Entnahme des Adsorptionsmaterials aus dem Gaskanal der Abschnitt der Gasleitung, der in einem zu analysierenden Gas angeordnet ist, in diesem Gas verbleiben, während das stromabwärts des Gaseinlasses in dem Gaskanal angeordnete Adsorptionsmaterial aus dem Gaskanal entnommen werden kann. Dabei kann insbesondere vorgesehen sein, dass das Ventil den Gaskanal zwischen dem Gaseinlass und dem Adsorptionsmaterial absperrt, während das Adsorptionsmaterial aus dem Gaskanal entnommen wird.

Ferner kann die Dichtigkeitsprüfung ganz einfach durchgeführt werden, indem das Ventil den Gaskanal zwischen dem Gaseinlass und dem Adsorptionsmaterial absperrt und anschließend der Unterdruck im Gaskanal stromabwärts des Ventils bestimmt wird. Hierzu kann bei abgesperrtem Ventil der stromabwärts des Ventils liegende Abschnitt des Gaskanals durch eine Gaspumpe mit Unterdruck beaufschlagt werden und gleichzeitig der Unterdruck in diesem Abschnitt der Gasleitung bestimmt werden.

Die Gasleitung kann grundsätzlich in Form einer beliebigen aus dem Stand der Technik bekannten Gasleitung vorliegen, also einer Leitung, in der ein Gaskanal ausgebildet ist, durch den ein Gas strömen beziehungsweise geleitet werden kann. Insoweit kann die Gasleitung beispielsweise aus einem oder mehreren Rohren oder Schläuchen zur Leitung eines Gases ausgebildet sein. Bevorzugt ist die Gasleitung derart ausgebildet dass durch diese ein Abgas, insbesondere ein Verbrennungsgas leitbar ist. Insoweit ist die Gasleitung bevorzugt derart ausgebildet, dass durch diese ein heißes Gas und/oder ein korrosives Gas leitbar ist. Insoweit ist bevorzugt vorgesehen, dass die Gasleitung aus einem hitzebeständigen und/oder nicht-korrosiven Material besteht, insbesondere aus Metall (bevorzugt aus Stahl oder einer Stahllegierung) Glas oder Keramik. Besonders bevorzugt ist die Gasleitung aus Metall und/oder Glas ausgebildet.

Der in der Gasleitung ausgebildete Gaskanal kann grundsätzlich einen beliebigen Querschnitt aufweisen. Bevorzugt weist der Gaskanal einen kreisförmigen Querschnitt auf. Dies hat den Vorteil, dass Gas sehr gleichförmig, insbesondere laminar durch den Gaskanal strömen kann.

Die Gasleitung weist einen Gaseinlass auf, der derart ausgebildet ist, dass durch diesen Gas in den Gaskanal einleitbar beziehungsweise einströmbar ist. Bevorzugt ist der Gaseinlass als endseitige Öffnung der Gasleitung ausgebildet.

Ein durch den Gaseinlass in den Gaskanal eingeleitetes Gas ist anschließend durch den Gaskanal strömbar. "Stromabwärts" im Sinne der vorliegenden Erfindung bedeutet demnach in Strömungsrichtung eines durch den Gaseinlass in den Gaskanal eingeleiteten und durch den Gaskanal strömenden Gases. Insoweit bezeichnet beispielsweise der Ausdruck "stromabwärts des Gaseinlasses" in Strömungsrichtung des Gases hinter dem Gaseinlass.

Der Gaseinlass ist in einem Abschnitt der Gasleitung ausgebildet, der zur Anordnung in einem Gas ausgebildet ist. Bei diesem Gas handelt es sich um ein Gas, von dem durch die erfindungsgemäße Gasentnahmesonde eine Probe entnommen werden kann. Indem der Gaseinlass an einem solchen Abschnitt der Gasleitung ausgebildet ist, der zur Anordnung in einem Gas ausgebildet ist, kann dieser Abschnitt der Gasleitung in einem Gas angeordnet und Gas aus diesem Gas über den Gaseinlass in den Gaskanal der Gasleitung einströmen. Dieser Abschnitt der Gasleitung ist bevorzugt derart ausgebildet, dass dieser in einem Abgas, insbesondere in einem Verbrennungsgas anordenbar ist. Insoweit kann dieser Abschnitt der Gasleitung bevorzugt derart ausgebildet sein, dass dieser in einem heißen Gas und/oder in einem korrosiven Gas anordenbar ist. Insoweit kann dieser Abschnitt der Gasleitung bevorzugt aus einem hitzebeständigen und/oder nicht-korrosiven Material bestehen, insbesondere aus einem Metall (insbesondere einem Stahl oder einer Stahllegierung).

Stromabwärts des Gaseinlasses, also in Strömungsrichtung des durch den Gaseinlass in den Gaskanal strömenden Gases hinter dem Gaseinlass, ist ein Adsorptionsmaterial in dem Gaskanal der Gasleitung angeordnet. Das Adsorptionsmaterial ist zur Adsorption wenigstens einer Substanz eines Gases ausgebildet, insbesondere zur Absorption etwaiger umwelt- oder gesundheitsgefährdender Substanzen in dem durch den Gaskanal strömbaren Gas. Bei diesen Substanzen kann es sich beispielsweise um eine oder mehrere der folgenden Substanzen handeln: wenigstens ein Schwermetall (insbesondere Quecksilber), Dioxin oder Furane. Insbesondere kann das Adsorptionsmaterial zur Adsorption von Quecksilber ausgebildet sein.

Nach einer besonders bevorzugten Ausführungsform ist das Adsorptionsmaterial als Schüttgut ausgebildet, also als schüttbeziehungsweise rieselfähiges Gut, insbesondere in Form eines Korngemenges. Insoweit kann das Adsorptionsmaterial beispielsweise in Form von Körnern, insbesondere beispielsweise in Form von Gries vorliegen. Insbesondere kann das Adsorptionsmaterial als durch ein Gas durchströmbares Schüttgut ausgebildet sein. Insoweit besitzt das als Schüttgut ausgebildete Adsorptionsmaterial eine solche Korngröße, dass dieses durch Gas durchströmbar ist.

Als Adsorptionsmaterial kann grundsätzlich eine beliebige Substanz vorliegen, durch die eine oder mehrere Substanzen, hinsichtlich derer die durch die Gasentnahmesonde zu entnehmende Gasprobe analysiert werden soll, adsorbierbar sind. Insoweit kann für die jeweils zu analysierende Substanz ein jeweils geeignetes Adsorbat verwendet werden. Nach einer besonders bevorzugten Ausführungsform liegt als Adsorptionsmaterial Kohle vor. Der besondere Vorteil von Kohle als Adsorptionsmaterial liegt insbesondere darin, dass durch Kohle sehr zahlreiche Substanzen adsorbierbar sind, insbesondere beispielsweise auch Quecksilber. Insbesondere kann das Adsorptionsmaterial insoweit als Kohle vorliegen, die insbesondere wie vorstehend als Schüttgut ausgebildet sein kann.

Bevorzugt ist der Abschnitt der Gasleitung, in dem das Adsorptionsmaterial in dem Gaskanal der Gasleitung angeordnet ist, vollständig mit dem Adsorptionsmaterial verfüllt. Mit anderen Worten ist der Gaskanal beziehungsweise der Strömungsquerschnitt des Gaskanals in dem Abschnitt der Gasleitung, in dem das Adsorptionsmaterial angeordnet ist, vollständig mit dem Adsorptionsmaterial verfüllt. Dies hat den besonderen Vorteil, dass hierdurch gewährleistet ist, dass das gesamte durch den Gaskanal strömende Gas das Adsorptionsmaterial durchströmt beziehungsweise eine Form von Schüttgut ausgebildetes Adsorptionsmaterial durchströmt, so dass die vom Adsorptionsmaterial adsorbierbaren Substanzen des Gases sehr gut vom Adsorptionsmaterial adsorbiert werden können.

Nach einer besonders bevorzugten Ausführungsform ist das Adsorptionsmaterial in einem Abschnitt der Gasleitung angeordnet, der entnehmbar in der Gasleitung angeordnet ist. Dieser Abschnitt der Gasleitung ist demnach aus der Gasleitung lösbar beziehungsweise von dem diesem Abschnitt benachbarten Abschnitten der Gasleitung trennbar und hierdurch aus der Gasleitung entnehmbar. Dies hat den besonderen Vorteil, dass das Adsorptionsmaterial zu dessen anschließender Analyse der daran adsorbierten Substanzen besonders leicht von der Gassonde entnehmbar und einer anschließenden Analyse zuführbar ist. Nach einer bevorzugten Fortbildung dieses Erfindungsgedankens ist dieser von der Gasleitung entnehmbare Abschnitt auch wieder in die Gasleitung einsetzbar. Dies hat den besonderen Vorteil, dass neues Adsorptionsmaterial, das noch keine zu analysierenden Substanzen adsorbiert hat, sehr einfach wieder in die Gasleitung einsetzbar ist und die Gasentnahmesonde daher, nachdem zu analysierendes Adsorptionsmaterial aus dieser entnommen worden ist, schnell wieder einsatzfähig ist, um eine weitere Gasprobe entnehmen zu können.

Das Adsorptionsmaterial ist in einem Abschnitt der Gasleitung angeordnet, der aus Glas ausgebildet ist. Dies hat insbesondere den Vorteil, dass eine etwaige unerwünschte Reaktion zwischen dem Adsorptionsmaterial und dem Glas ausgeschlossen ist, da Glas praktisch mit keinem Material reagiert und insoweit praktisch inerte ist. Insoweit können praktisch keine Substanzen des Glases vom Adsorptionsmaterial adsorbiert werden und eine etwaige Analyse des Adsorptionsmaterials hierdurch verfälschen. Als Glas für diesen Abschnitt kann beispielsweise Kalk-Natron-Glas verwendet werden, bevorzugt jedoch Laborglas, insbesondere Borosilikatglas.

Der aus Glas ausgebildete Abschnitt der Gasleitung, in dem das Adsorptionsmaterial angeordnet ist, kann beispielsweise als Rohr, also als Glasrohr ausgebildet sein. Über Verbindungsmittel kann das Rohr an die sich daran anschließenden Abschnitte der Gasleitung anschließbar sein. Insoweit kann auf die aus dem Stand der Technik bekannten Verbindungsmittel zur Verbindung von Rohren beziehungsweise Rohrstücken zurückgegriffen werden. Beispielsweise kann der aus Glas ausgebildete Abschnitt der Gasleitung, in dem das Adsorptionsmaterial angeordnet ist, über Verbindungsmittel in Form von Steckverbindungen oder Schraubverbindungen mit den sich daran anschließenden Abschnitten der Gasleitung verbunden sein. Um die Gasdichtigkeit im Bereich dieser Verbindungsmittel zu gewährleisten, können geeignete Dichtungen vorgesehen sein, beispielsweise Dichtungsringe, insbesondere beispielsweise O-Ringe.

Das Ventil, durch das der Gaskanal zwischen dem Gaseinlass und dem Adsorptionsmaterial absperrbar ist, kann grundsätzlich ein beliebiges Ventil nach dem Stand der Technik sein, durch den eine Gasleitung beziehungsweise ein Gaskanal in einer Gasleitung absperrbar ist. Beispielsweise kann es sich bei dem Ventil um ein Nadelventil oder einen Kugelhahn handeln. Bevorzugt handelt es sich bei dem Ventil um ein Magnetventil, also ein elektromagnetisch ansprechbares Ventil. Dies hat den Vorteil, dass das Ventil besonders einfach, insbesondere elektrisch betätigbar ist.

Nach einer bevorzugten Ausführungsform umfasst die Gasentnahmesonde ein Befestigungsmittel zur Befestigung der Gasentnahmesonde an einer Wand eines Gasbehälters. Hierdurch ist die Gasentnahmesonde besonders einfach an einer Wand eines Gasbehälters befestigbar.

Bei einem Gasbehälter im Sinne der Erfindung kann es sich grundsätzlich um eine beliebige Vorrichtung handeln, durch die ein Gas speicherbar oder leitbar ist, insbesondere ein Abgas, insbesondere ein Verbrennungsgas speicherbar oder leitbar ist. Die Wand des Gasbehälters, an der die Gasentnahmesonde über das Befestigungsmittel befestigbar ist, begrenzt ein entsprechendes Gas, also einen Innenraum zur Aufnahme des durch den Gasbehälter speicherbaren oder leitbaren Gases. Insbesondere kann der Gasbehälter in Form einer Abgasleitung, insbesondere in Form einer Verbrennungsgasleitung vorliegen. Insoweit kann die Gasentnahmesonde insbesondere ein Befestigungsmittel zur Befestigung der Gasentnahmesonde an einer Wand einer Abgasleitung, insbesondere an einer Wand einer Verbrennungsgasleitung umfassen.

Nach einer Fortbildung dieses Erfindungsgedankens kann das Befestigungsmittel derart ausgebildet sein, dass die Gasentnahmesonde über das Befestigungsmittel derart an der Wand befestigbar ist, dass der Abschnitt der Gasleitung, an dem der Gaseinlass angeordnet ist, innerhalb des Gasbehälters angeordnet ist. Dies hat den besonderen Vorteil, dass die Gasentnahmesonde über das Befestigungsmittel besonders einfach derart an der Wand des Gasbehälters befestigbar ist, dass der Gaseinlass innerhalb des Gasbehälters angeordnet ist und somit im Gasbehälter befindliches Gas, von dem durch die Gasentnahmesonde eine Probe entnommen werden soll, ohne Weiteres über den Gaseinlass in den Gaskanal der Gasleitung der Gasentnahmesonde strömen kann und insoweit durch die Gasentnahmesonde eine Probe aus dem Gas entnommen werden kann. Nach einer bevorzugten Weiterbildung dieses Erfindungsgedankens ist das Befestigungsmittel derart ausgebildet, dass die Gasentnahmesonde derart über das Befestigungsmittel an der Wand des Gasbehälters befestigbar ist, dass der Abschnitt der Gasleitung, an dem der Gaseinlass angeordnet ist, innerhalb des Gasbehälters angeordnet ist und der Abschnitt der Gasleitung, in dem das Adsorptionsmaterial angeordnet ist, außerhalb des Gasbehälters angeordnet ist. Dies hat den besonderen Vorteil, dass das Adsorptionsmaterial besonders einfach aus der Gasleitung entnommen werden kann, insbesondere auch, ohne die Gasleitung zuvor von dem Gasbehälter entnehmen zu müssen. Besonders einfach ist die Entnahme des Adsorptionsmaterials, wenn die Gasentnahmesonde, wie zuvor ausgeführt, derart ausgebildet ist, dass das Adsorptionsmaterial in einem Abschnitt der Gasleitung angeordnet ist, der entnehmbar in der Gasleitung angeordnet ist. Nach einer weiteren Fortbildung dieses Erfindungsgedankens kann das Befestigungsmittel der Gasentnahmesonde derart ausgebildet sein, dass die Gasentnahmesonde derart über das Befestigungsmittel an der Wand befestigbar ist, dass das Ventil außerhalb des Gasbehälters angeordnet ist. Insbesondere hat dies den Vorteil, dass das Ventil in diesem Fall durch etwaige heiße oder aggressive Gase im Gasbehälter nicht angegriffen wird und die Gasentnahmesonde daher besonders wartungsarm betrieben werden kann. Ein weiterer Vorteil besteht darin, dass das Ventil besonders einfach bedienbar ist.

Nach einer Ausführungsform ist vorgesehen, dass die Gasentnahmesonde eine Gaspumpe umfasst, durch die der Gaskanal mit Unterdruck beaufschlagbar ist, wobei der Gaskanal bevorzugt stromabwärts des Adsorptionsmaterials an die Gaspumpe angeschlossen ist. Mit anderen Worten führt der Gaskanal stromabwärts des Adsorptionsmaterials zu einer Gaspumpe, durch die der Gaskanal mit Unterdruck beaufschlagbar ist.

Bei der Gaspumpe kann es sich grundsätzlich um eine beliebige Pumpe handeln, durch die Gas pumpbar und damit der Gaskanal mit Unterdruck beaufschlagbar ist. Beispielsweise kann es sich bei der Gaspumpe um eine Faltenbalgpumpe handeln.

Nach einer Ausführungsform umfasst die Gasentnahmesonde ein Heizmittel, durch das der Abschnitt der Gasleitung, in der das Absorptionsmaterial angeordnet ist, beheizbar ist. Insofern können beispielsweise in dem Abschnitt der Gasleitung, in der das Adsorptionsmaterial angeordnet ist, Heizmittel angeordnet sein, durch die dieser Abschnitt der Gasleitung beheizbar ist. Beispielsweise kann es sich bei diesen Heizmitteln um Widerstandheizelemente handeln.

Solche Heizmittel haben insbesondere den Vorteil, dass eine Bildung von Kondensflüssigkeit in diesem Abschnitt der Gasleitung, in der das Adsorptionsmaterial angeordnet ist, verhindert werden kann, indem dieser Abschnitt durch die Heizmittel beheizt wird. Dies hat den Vorteil, dass durch die Vermeidung von Kondensflüssigkeit im Bereich des Adsorptionsmaterials eine verschlechterte Adsorption durch das Adsorptionsmaterial auf Grund von Kondensflüssigkeit verhindert werden kann.

Nach einer Ausführungsform umfasst die Gasentnahmesonde eine Umhüllung, durch die der Abschnitt der Gasleitung, in der das Adsorptionsmaterial angeordnet ist, zumindest abschnittsweise umhüllbar ist. Beispielsweise kann es sich bei dieser Umhüllung um eine zylindrische Umhüllung handeln, beispielsweise eine Umhüllung aus Metall. Diese Umhüllung kann beispielsweise eine im wesentlichen kreiszylindrische Form aufweisen, die um den Abschnitt der Gasleitung, in der das Adsorptionsmaterial angeordnet ist, herum angeordnet ist. Nach einer Fortbildung kann der Innenraum dieser Umhüllung beheizbar sein, insbesondere durch die wie vorstehend ausgebildeten Heizmittel. Indem der Innenraum der Umhüllung beheizbar ist und im Innenraum der Umhüllung gleichzeitig der Abschnitt der Gasleitung, in dem das Adsorptionsmaterial angeordnet ist, angeordnet ist, kann dieser Abschnitt sehr effektiv beheizt werden.

Nach einer Ausführungsform ist vorgesehen, dass zumindest ein Abschnitt der Gasleitung in der Wandung einer solchen Umhüllung geführt ist. Beispielsweise kann eine Umhüllung, insbesondere beispielsweise eine zylindrische Umhüllung, einen endseitigen Deckel aufweisen, in dem ein Abschnitt der Gasleitung ausgebildet ist. Beispielsweise kann ein solcher, in einem Deckel der Umhüllung ausgebildeter Abschnitt der Gasleitung, zum Anschluss an den Abschnitt der Gasleitung ausgebildet sein, in dem das Adsorptionsmaterial angeordnet ist, insbesondere beispielsweise einen entnehmbaren Abschnitt, wie oben ausgeführt. Nach einer Ausführungsform ist ein Deckel der Umhüllung derart ausgebildet, dass er derart an der Umhüllung befestigbar ist, dass er in seiner an der Umhüllung befestigten Stellung einen Abschnitt der Gasleitung, in der das Adsorptionsmaterial angeordnet ist, und der entnehmbar in der Gasleitung angeordnet ist, in einer gesicherten Stellung in der Gasleitung hält und bei Lösung des Deckels die Entnahme dieses Abschnitts aus der Gasleitung ermöglicht. Dabei kann beispielsweise im Deckel der Umhüllung ein Abschnitt der Gasleitung angeordnet sein, der an den Abschnitt der Gasleitung, in dem das Adsorptionsmaterial angeordnet ist, anschließbar ist.

Nach einer Ausführungsform der Erfindung umfasst die Gasentnahmesonde ferner eine Druckmessvorrichtung, durch die der Gasdruck im Gaskanal messbar ist. Bei einer solchen Druckmessvorrichtung kann es sich grundsätzlich um eine beliebige aus dem Stand der Technik bekannte Vorrichtung handeln, durch die ein Gasdruck in einer Gasleitung messbar ist. Bevorzugt ist durch die Druckmessvorrichtung der Gasdruck in der Gasleitung stromabwärts des Ventils messbar.

Nach einer Ausführungsform kann die Gasentnahmesonde eine Durchflussmessvorrichtung umfassen, durch die der Gasdurchfluss im Gaskanal messbar ist. Bei dieser Durchflussmessvorrichtung kann es sich um eine beliebige Durchflussmessvorrichtung aus dem Stand der Technik handeln, durch die ein Gasdurchfluss in einer Gasleitung messbar ist.

Bevorzugt ist durch die Durchflussmessvorrichtung der Gasdurchfluss in der Gasleitung stromabwärts des Ventils messbar.

Der besondere Vorteil einer solchen Druckmessvorrichtung sowie einer solchen Durchflussmessvorrichtung liegt insbesondere darin, dass durch diese der Gasdruck und der Gasdurchfluss im Gaskanal messbar sind, während Gas durch den Gaskanal strömt. Hierdurch ist bestimmbar, welche Gasmenge insgesamt durch den Gaskanal geströmt ist. Auf Basis einer solchen Bestimmung der durch den Gaskanal geströmten Gasmenge sowie der Analyse, insbesondere der quantitativen Analyse einer durch das Adsorptionsmaterial adsorbierten Substanz, ist die Konzentration dieser Substanz in dem zu analysierenden Gas bestimmbar.

Eine Gaspumpe, durch die der Gaskanal mit Unterdruck beaufschlagbar ist, hat insbesondere zwei Vorteile. Zum Einen kann durch einen mittels der Gaspumpe erzeugten Unterdruck im Gaskanal Gas über den Gaseinlass in den Gaskanal gesaugt werden, so dass zu analysierendes Gas das Adsorptionsmaterial durchströmt. Zum Zweiten kann die Gaspumpe dazu verwendet werden, die Dichtigkeitsprüfung der Gasentnahmesonde durchzuführen. Hierzu wird das Ventil geschlossen und der Gaskanal stromabwärts des Ventils mittels der Gaspumpe mit Unterdruck beaufschlagt. Durch gleichzeitige Bestimmung des Unterdrucks in diesem Abschnitt des Gaskanals mittels einer Druckmessvorrichtung, die insbesondere auch Bestandteil der Gasentnahmesonde sein kann, ist die Dichtigkeit des Gaskanals überprüfbar.

Gegenstand der Erfindung ist auch ein Gasbehälter, der eine Wand umfasst, die ein Gas begrenzt, wobei and der Wand eine erfindungsgemäße Gasentnahmesonde befestigt ist.

Bei diesem Gasbehälter kann es sich um einen wie oben beschriebenen Gasbehälter handeln, also insbesondere beispielsweise eine Verbrennungsgasleitung.

Besonders bevorzugt kann die Gasentnahmesonde, wie oben ausgeführt, über Befestigungsmittel derart an der Wand des Gasbehälters befestigt sein, dass der Abschnitt der Gasleitung, an der der Gaseinlass angeordnet ist, innerhalb des Gasbehälters angeordnet ist. Nach einer weiter bevorzugten Ausführungsform kann, wie oben ausgeführt, der Abschnitt der Gasleitung, in dem das Adsorptionsmaterial angeordnet ist, außerhalb des Gasbehälters und noch weiter bevorzugt, wie oben ausgeführt, ebenfalls das Ventil außerhalb des Gasbehälters angeordnet sein.

Gegenstand der Erfindung ist ferner ein Verfahren zur Entnahme einer Gasprobe aus einem Gas in einem Gasbehälter, welches die folgenden Schritte umfasst:
Zur Verfügungstellung eines Gasbehälters, umfassend eine Gas begrenzende Wand;
Zur Verfügungstellung einer erfindungsgemäßen Gasentnahmesonde;
Befestigung der Gasentnahmesonde an der Wand des Gasbehälters derart, dass der Abschnitt der Gasleitung, an der der Gaseinlass angeordnet ist, in dem Gas angeordnet ist;
Leitung des Gases durch den Gaseinlass in den Gaskanal und durch das im Gaskanal angeordnete Adsorptionsmaterial.

Zur Leitung des Gases durch den Gaskanal kann insbesondere eine Gaspumpe verwendet werden, die, wie zuvor ausgeführt, Bestandteil der Gasentnahmesonde sein kann. Insoweit kann die Leitung des Gases durch den Gaseinlass in den Gaskanal und durch das im Gaskanal angeordnete Adsorptionsmaterial insbesondere auch dadurch erwirkt werden, dass der Gaskanal mittels einer solchen Gaspumpe mit Unterdruck beaufschlagt wird. Ferner kann, wie zuvor ausgeführt, gleichzeitig der Gasdruck und/oder der Gasdurchfluss im Gaskanal gemessen werden, um hierdurch später die Konzentration einer durch das Adsorptionsmaterial adsorbierten Substanz im zu analysierenden Gas bestimmen zu können.

Bei dem Gasbehälter kann es sich insbesondere um einen wie vorstehend ausgebildeten Gasbehälter handeln, also insbesondere beispielsweise eine Verbrennungsgasleitung.

Dabei kann die Gasentnahmesonde, wie zuvor ausgeführt, an der Wand des Gasbehälters befestigt sein.

Weitere Merkmale der Erfindung ergeben sich aus den Ansprüchen, den beigefügten Figuren sowie der zugehörigen Figurenbeschreibung.

Sämtliche Merkmale der Erfindung können, einzeln oder in Kombination, beliebig miteinander kombinierbar sein.

Zwei Ausführungsbeispiele der Erfindung werden in der nachfolgenden Figurenbeschreibung näher erläutert.

Dabei zeigt
- Figur 1: ein schematisches erstes Ausführungsbeispiel einer Gasentnahmesonde in einer seitlichen Schnittansicht;
- Figur 2: ein weiteres Ausführungsbeispiel einer Gasentnahmesonde in einer perspektivischen Ansicht von oben;
- Figur 3: die Gasentnahmesonde gemäß Figur 2 in einer perspektivischen Ansicht von der Seite;
- Figur 4: die Gasentnahmesonde gemäß Figur 2 in einer perspektivischen Darstellung von schräg oben;
- Figur 5: die Gasentnahmesonde gemäß Figur 2 in einer Schnittansicht gemäß der Schnittlinie A-A in Figur 3;
- Figur 6: einen Ausschnitt der Schnittansicht gemäß Figur 5 in einer vergrößerten Darstellung;
- Figur 7: einen weiteren Ausschnitt aus der Schnittansicht gemäß Figur 5 in einer vergrößerten Ansicht; und
- Figur 8: ein Detail der Darstellung gemäß Figur 3, auf der teilweise innenliegende, in der perspektivischen Ansicht nicht erkennbare Bestandteile dargestellt sind.

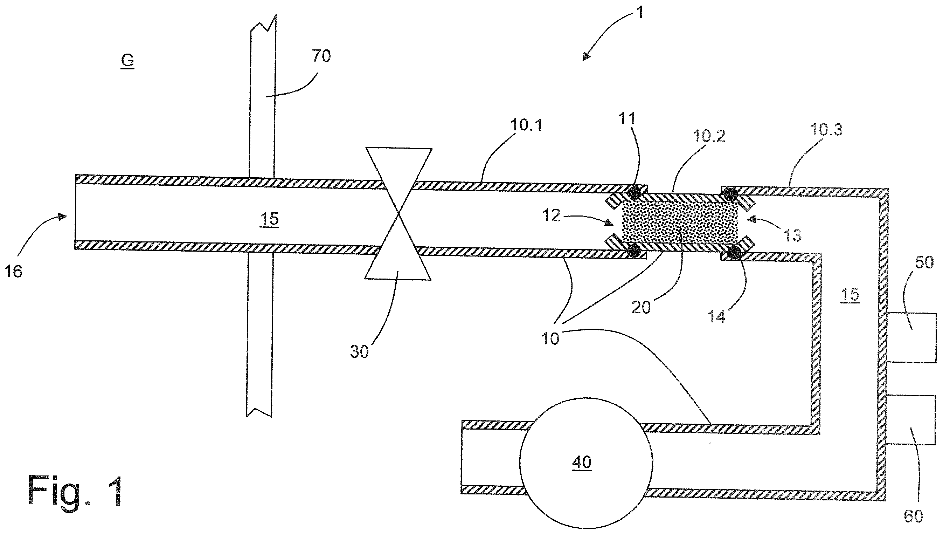

Die in Figur 1 dargestellte Gasentnahmesonde ist in ihrer Gesamtheit mit dem Bezugszeichen 1 gekennzeichnet. Die Gasentnahmesonde 1 umfasst eine Gasleitung 10, ein Adsorptionsmaterial 20 sowie ein Ventil 30.

Die Gasleitung 10 umfasst die Abschnitte 10.1, 10.2 und 10.3, die strömungstechnisch miteinander verbunden sind. Der Abschnitt 10.1 der Gasleitung 10 ist als zylindrisches Rohr aus einem temperatur- und korrosionsbeständigen Stahl ausgebildet. Ferner ist dieser Abschnitt 10.1 der Gasleitung 10 zur Anordnung in einem Gas ausgebildet.

An den Abschnitt 10.1 schließt sich ein Abschnitt 10.2 der Gasleitung an, der als Glasrohr aus einem Laborglas ausgebildet ist. Der Abschnitt 10.2 ist in den Abschnitt 10.1 der Gasleitung 10 gesteckt, wobei eine Gasdichtigkeit dieser Steckverbindung über einen O-Ring 11 aus Gummi hergestellt ist. In dem Abschnitt 10.2 ist ein Adsorptionsmaterial 20 in Form von Kohlegries angeordnet. Um ein Herausrieseln des Adsorptionsmaterials 20 aus dem Glasrohr 10.2 zu verhindern, sind die seitlichen Öffnungen 12, 13 des Glasrohres 10.2 verengt. An den Abschnitt 10.2 schließt sich ein Abschnitt 10.3 der Gasleitung 10 an, der aus einem gewinkelt ausgebildeten Metallrohr besteht. Dabei ist das Glasrohr 10.2 entsprechend der Verbindung mit dem Abschnitt 10.1 in den Abschnitt 10.3 gesteckt und diese Steckverbindung wiederum über einen O-Ring 14 aus Gummi abgedichtet.

Auf Grund dieser Steckverbindungen ist der Abschnitt 10.2 entnehmbar in der Gasleitung 10 angeordnet. Ferner ist dieser Abschnitt 10.2 mittels der Steckverbindung wieder sehr einfach in die Gasleitung einsetzbar. Die Abschnitte 10.1, 10.2, 10.3 der Gasleitung 10 bilden einen Gaskanal 15 aus, durch den ein Gas strömbar ist. Dabei umfasst der Abschnitt 10.1 der Gasleitung 10 an seinem dem Ende, an dem der Abschnitt 10.2 in den Abschnitt 10.1 der Gasleitung 10 gesteckt ist, gegenüberliegenden Ende einen Gaseinlass 16 in Form einer endseitigen Öffnung. Durch den Gaseinlass 16 ist ein Gas in den Gaskanal 15 einleitbar. Das Ventil 30 ist am Abschnitt 10.1 des Gaskanals 10 angeordnet und derart ausgebildet, dass der Gaskanal 15 durch das Ventil 30 zwischen dem Gaseinlass 16 und dem Adsorptionsmaterial 20 absperrbar ist. Das Ventil 30 ist als Nadelventil ausgebildet, das elektromagnetisch ansprechbar ist.

Der Gaskanal 15 ist stromabwärts des Adsorptionsmaterials 20 über den Abschnitt 10.3 der Gasleitung 10 an eine Gaspumpe 40 angeschlossen.

Ferner weist die Gasentnahmesonde 1 eine Druckmessvorrichtung 50 auf, durch die der Gasdruck im Gaskanal 15 messbar ist. Dabei ist durch die Druckmessvorrichtung 15 der Gasdruck in dem stromabwärts des Adsorptionsmaterials 20 angeordneten Abschnitt 10.3 der Gasleitung 10 messbar.

Ferner umfasst die Gasentnahmesonde 1 eine Durchflussmessvorrichtung 60, durch die der Gasdurchfluss im Gaskanal 15 messbar ist. Dabei ist durch die Durchflussmessvorrichtung 15 der Gasdurchfluss in dem stromabwärts des Adsorptionsmaterials 20 angeordneten Abschnitt 10.3 der Gasleitung 10 messbar.

Die Gasentnahmesonde 1 ist an einer Wand 70 eines Gasbehälters in Form einer Verbrennungsgasleitung (nicht dargestellt) angeordnet. Die Wand 70 begrenzt ein Gas G.

Auf Grund seiner Ausbildung aus einem temperatur- und korrosionsfesten Stahl ist der Abschnitt 10.1 der Gasleitung 10 zur Anordnung in dem Gas G ausgebildet. Dabei ist die Gasentnahmesonde 10 derart an der Wand 70 befestigt, dass der Abschnitt 10.1 der Gasleitung 10, an dem der Gaseinlass 60 angeordnet ist, durch die Wand 70 geführt und teilweise in dem Gas G angeordnet ist. Gleichzeitig ist die Gasentnahmesonde 1 derart an der Wand 70 befestigt, dass die übrigen Bestandteile der Gasentnahmesonde 1 außerhalb des Gases G beziehungsweise außerhalb des Gasbehälters angeordnet sind.

Zur Entnahme einer Gasprobe aus dem Gas G mittels der Gasentnahmesonde 1 wird der Gaskanal 15 mittels der Gaspumpe 40 mit Unterdruck beaufschlagt. Hierdurch wird ein Gasanteil durch den Gaseinlass 16 in den Gaskanal 15 in der Gasleitung 10 gesaugt. Diese Gasprobe strömt zunächst durch den Gaskanal 15 im Abschnitt 10.1, anschließend durch das eine offene Ende des Abschnitts 10.2 in den Abschnitt 10.2 und in diesen Abschnitt 10.2 durch das in diesem Abschnitt 10.2 angeordnete Adsorptionsmaterial 20. Anschließend strömt das Gas durch das gegenüberliegende Ende 13 des Abschnitts 10.2 wieder aus diesem Abschnitt 10.2 hinaus in den Abschnitt des Gaskanals 15, der in Abschnitt 10.3 der Gasleitung 10 ausgebildet ist. Nach Passieren der Gaspumpe 40 wird das durch den Gaskanal 15 geströmte Gas an die Umgebung abgegeben. Während das Gas durch den Gaskanal 15 geleitet wird, werden kontinuierlich der Gasdruck und der Gasdurchfluss im Gaskanal 15 mittels der Druckmessvorrichtung 50 und der Durchflussmessvorrichtung 60 gemessen.

Während das Gas 15 durch das Adsorptionsmaterial 20 in Form des Kohlegrieses strömt, adsorbiert das Adsorptionsmaterial 20 Substanzen des Gases. Beispielsweise adsorbiert das Adsorptionsmaterial 20 etwaige Anteile an Quecksilber im Gas.

Nachdem Gas für eine Dauer durch den Gaskanal geleitet worden ist, wird die Pumpe 40 abgestellt, der Gaskanal 15 mittels des Ventils 30 geschlossen und anschließend der Abschnitt 10.2 der Gasleitung 10 in Form des Glasrohres aus der Gasleitung 10 entnommen. Anschließend wird der Anteil an Quecksilber, den das Adsorptionsmaterial 20 adsorbiert hat, quantitativ bestimmt. Ferner wird die durch den Gaskanal 15 geströmte Gasmenge mittels des gemessenen Gasdrucks und Gasdurchflusses bestimmt. Mittels dieser Messwerte ist die Konzentration an Quecksilber im Gas G bestimmbar.

Zur Durchführung einer Dichtigkeitsprüfung der Gasentnahmesonde 1 wird der Gaskanal 15 mittels des Ventils 30 geschlossen und anschließend der Gaskanal 15 stromabwärts des Ventils 30 mittels der Pumpe 40 mit Unterdruck beaufschlagt. Gleichzeitig wird der Gasdruck im Gaskanal 15 stromabwärts des Ventils 30 gemessen. Hierdurch ist bestimmbar, ob die Gasleitung 10 in diesem Abschnitt gasdicht ist und hierdurch gewährleistet ist, dass die gesamte Gasmenge, die durch den Gaskanal 15 geleitet wird, durch das Adsorptionsmaterial 20 strömt.

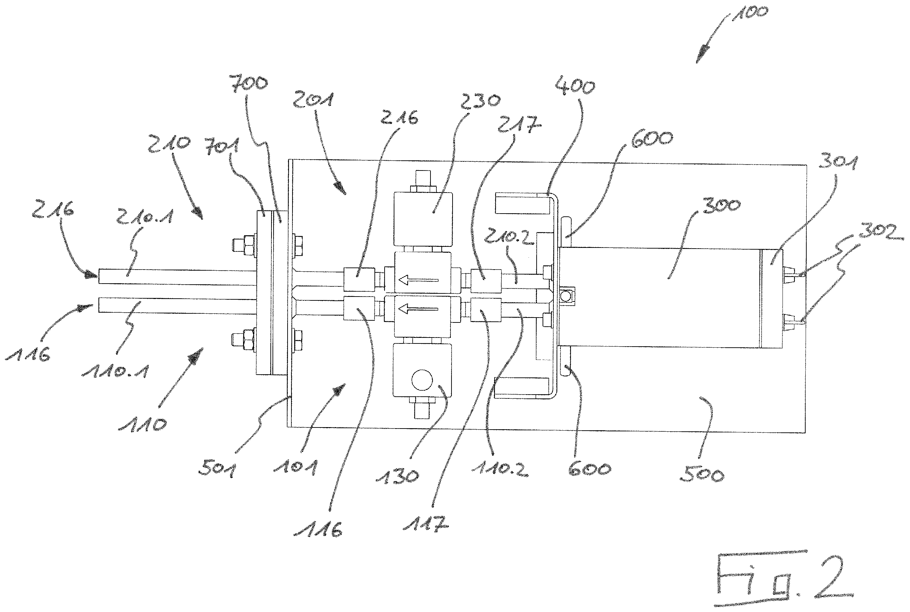

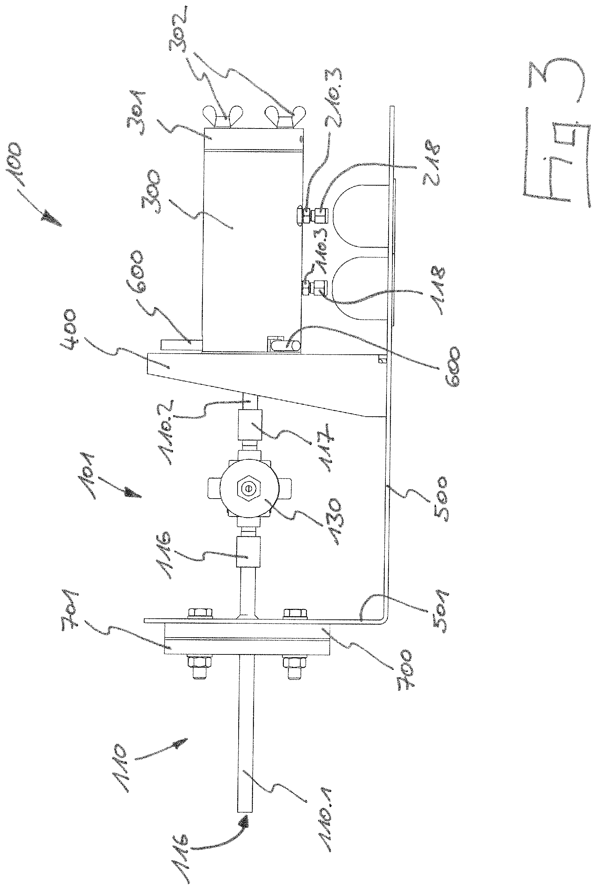

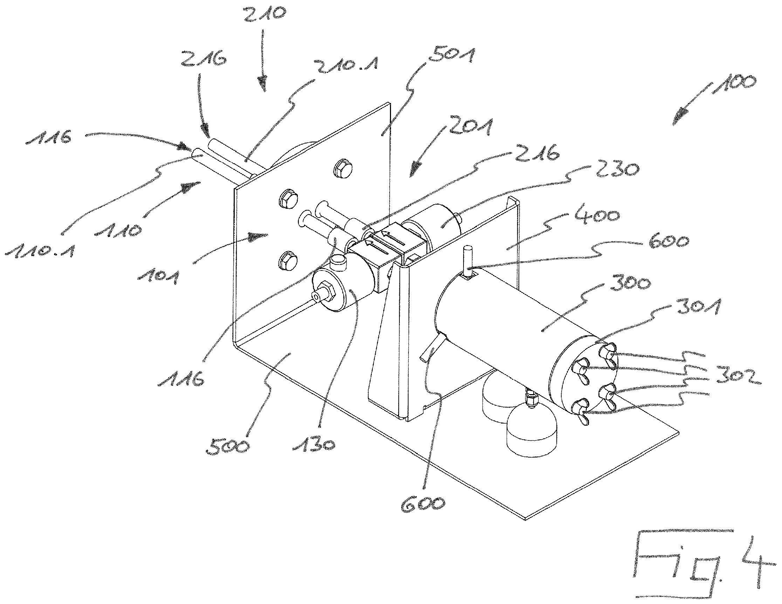

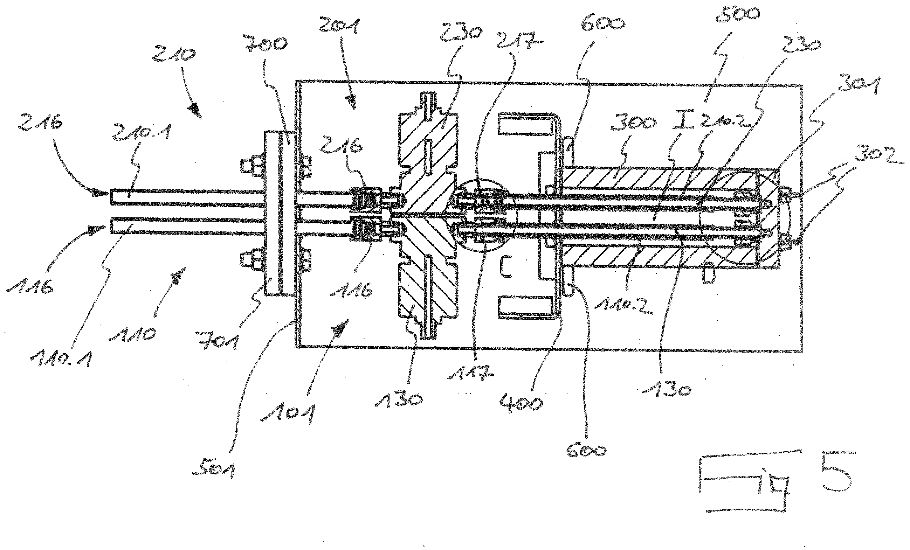

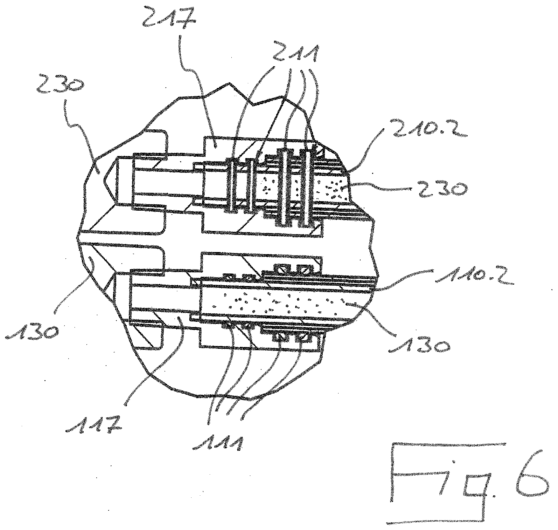

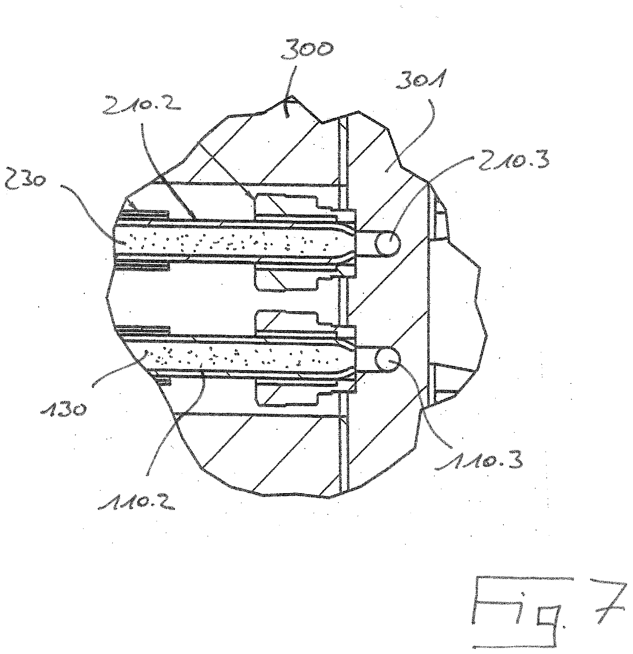

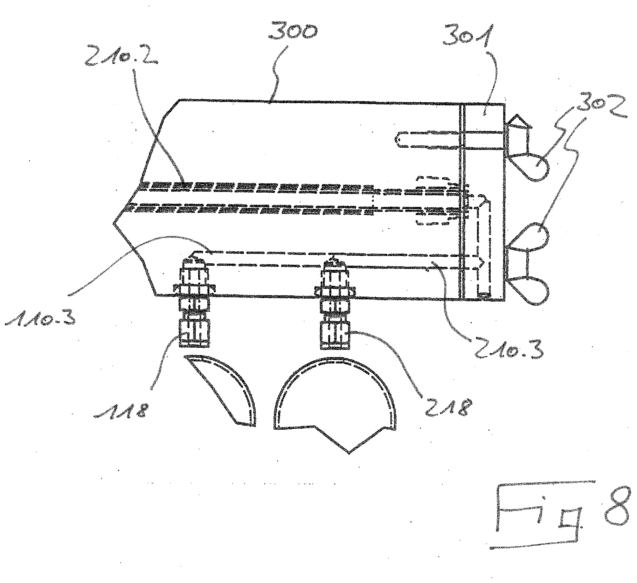

Eine alternative Ausführungsform einer erfindungsgemäßen Gasentnahmesonde ist in den Figuren 2 bis 8 dargestellt.

Konkret ist in den Figuren 2 bis 8 eine Ausführungsform einer Vorrichtung 100 dargestellt, die zwei Gasentnahmesonden 110, 210 umfasst. Die beiden Gasentnahmesonden 110, 210 sind im wesentlichen identisch aufgebaut und parallel zueinander in der Vorrichtung 100 angeordnet. Dieser redundante Aufbau zweier Gasentnahmesonden 110, 210 dient dazu, die durch die jeweiligen Gasentnahmesonden 110, 210 erzielten Messergebnisse miteinander vergleichen und dadurch deren Aussagekraft abschätzen zu können.

Nachfolgend wird im wesentlichen allein die Gasentnahmesonde 110 näher erläutert, wobei die redundant hierzu in der Vorrichtung 100 aufgebaute Gasentnahmesonde 210 im wesentlichen identisch aufgebaut ist.

Die Gasentnahmesonde 101 umfasst eine Gasleitung 110, die drei Abschnitte 110.1, 110.2, 110.3 umfasst. Der Abschnitt 110.1 ist als zylindrisches Rohr aus einem temperatur- und korrosionsfesten Stahl ausgebildet.

Der Abschnitt 110.2 ist als Glasrohr aus Laborglas ausgebildet.

Der Abschnitt 110.3 ist als mehrfach abgewinkeltes Metallrohr ausgebildet, der teilweise im Deckel 301 einer unten näher erläuterten Umhüllung 300 verläuft.

Im Glasrohr 110.2 ist ein Adsorptionsmaterial 120 in Form von Kohlegries angeordnet.

Zwischen dem Abschnitt 110.1 der Gasleitung 110 und dem Abschnitt 110.2 der Gasleitung 110 ist ein Nadelventil 130 angeordnet. Dabei ist der Abschnitt 110.1 in ein Verbindungsmittel 116 gesteckt, das strömungstechnisch an das Nadelventil 130 gekoppelt ist. Der Abschnitt 110.1 ist dabei über O-Ringe aus Gummi gegen das Verbindungsmittel 116 abgedichtet. In gleicher Weise ist der Abschnitt 110.2 in ein Verbindungsmittel 117 gesteckt, das ebenfalls strömungstechnisch an das Nadelventil 130 gekoppelt ist. Dabei ist der Abschnitt 110.2 entsprechend über O-Ringe 111 gegen das Verbindungsmittel 117 abgedichtet. Das Glasrohr 110.2 ist durch eine Umhüllung 300 weitgehend umhüllt. Die Umhüllung 300 ist als im wesentlichen rohrförmiger Körper aus Metall ausgebildet und an einer Längsseite durch einen Deckel 301 verschließbar. An der, dem Deckel 301 gegenüberliegenden Seite ist die Umhüllung 300 an einem Halteblech 400 befestigt, das wiederum an einer Metallplatte 500 befestigt ist. An der Umhüllung 300 sind drei Widerstandheizelemente 600 angeordnet, durch die der von der Umhüllung 300 umschlossene Innenraum I beheizbar ist. Hierdurch ist der von der Umhüllung 300 weitgehend umhüllte Abschnitt 110.2 der Gasleitung 110, in dem das Adsorptionsmaterial 120 angeordnet ist, durch die Widerstandheizelemente 600 beheizbar.

Das Ende des Abschnittes 110.2, das dem Ende dieses Abschnitts 110.2 gegenüberliegt, das in das Verbindungsmittel 117 gesteckt ist, ist an den Abschnitt 110.3 der Gasleitung 110 gekoppelt. Der Anschluss an diesen Abschnitt 110.3 der Gasleitung ist im Deckel 301 der Umhüllung 300 ausgebildet, in welchem das Anschlussstück an diesen Abschnitt 110.3 der Gasleitung 110 angeordnet ist. Dabei ist der Deckel 301 durch Flügelschrauben 302 an die Umhüllung 300 geschraubt. Im verschraubten Zustand des Deckels 301 ist der Abschnitt 110.2 dabei über den im Deckel 301 ausgebildeten Anschluss strömungstechnisch mit dem Abschnitt 110.3 der Gasleitung 110 verbunden.

Die Gasentnahmesonde 110 umfasst ferner ein Befestigungsmittel 700 zur Befestigung der Gasentnahmesonde 101 an einer Wand eines Gasbehälters. Dieses Befestigungsmittel 700 ist in Form eines Flanschblattes ausgebildet, das an einem abgewinkelten Abschnitt 501 des Blechs 500 angeschraubt ist. Dabei ist der Abschnitt 110.1 der Gasleitung 110 durch diese Flanschplatte 700 geführt.

An dem Ende des Abschnittes 110.1, das dem Ende des Abschnittes 110.1 gegenüberliegt, an dem der Abschnitt 110.1 in das Verbindungsmittel 116 gesteckt ist, weist der Abschnitt 110.1 einen Gaseinlass 116 auf. Der Gaseinlass 116 mündet in den Gaskanal 115, der in der Gasleitung 110 ausgebildet ist. Dabei sind die Abschnitte 110.1, 110.2, 110.3 der Gasleitung 110 derart strömungstechnisch miteinander verbunden, dass diese insgesamt den Gaskanal 115 ausbilden.

Durch das Ventil 130 ist der Gaskana 1101 zwischen dem Gaseinlass 116 und dem Adsorptionsmaterial 120, das im Abschnitt 110.2 der Gasleitung 110 angeordnet ist, absperrbar.

Die Gasentnahmesonde 201 ist entsprechend aufgebaut und umfasst eine Gasleitung 210 mit den drei Abschnitten 210.1, 210.2, 210.3. Der Abschnitt 210.1 ist über ein Verbindungsmittel 216 an das Ventil 230 gekoppelt und der Abschnitt 210.2 über das Verbindungsmittel 217 ebenfalls an das Ventil 230 gekoppelt. Die Umhüllung 300 umfängt gleichermaßen auch den als Glasrohr ausgebildeten Abschnitt 210.2 der Gasleitung 210, in dem das Adsorptionsmaterial 220 angeordnet ist. Der Abschnitt 210.1 ist entsprechend durch das Flanschblatt 701 geführt und weist an seinem freien Ende einen Gaseinlass 216 in den in der Gasleitung 210 ausgebildeten Gaskanal 215 auf.

Zur Befestigung der beiden Gasentnahmesonden 101, 201 an einer Wand eines Gasbehälters kann das Flanschblatt 700 an ein Flanschblatt 701, das an der Wand eines Gasbehälters angeordnet ist, zur Ausbildung einer Flanschverbindung der Flanschblätter 700, 701 angeordnet werden. Bei einer solchen Befestigung an der Wand eines Gasbehälters sind die Abschnitte 110.1, 210.1 der Gasleitungen 110, 210 der Gasentnahmesonden 101, 201, an denen der jeweilige Gaseinlass 116, 216 angeordnet ist, in dem Gas angeordnet, das durch die Wand des Gasbehälters umschlossen ist. Gleichzeitig sind die übrigen Komponenten der Gasentnahmesonden 101, 201 außerhalb des Gasbehälters angeordnet.

Ferner können, wie oben erläutert, an die Abschnitte 110.3, 210.3 der Gasleitungen 110, 210 jeweils Gaspumpen angeschlossen werden, um Gas durch die Gaseinlässe 116, 216 in die Gasleitungen 110, 210 und durch die jeweiligen Gaskanäle 115, 215 hindurchleiten zu können. Hierzu weisen die Abschnitte 110.3, 210.3 Verschraubungen 118, 218 auf, an denen jeweils eine Saugleitung mit einer Gaspumpe anschließbar ist.

Ferner sind die als Glasröhren ausgebildeten Abschnitte 110.2, 210.2 der Gasleitungen 110, 210 entnehmbar in den jeweiligen Gasleitungen 110, 210 ausgebildet. Zur Entnahme dieser Abschnitte 110.2, 210.2 wird der Deckel 301 durch Lösen der Flügelschrauben 302 von der Umhüllung 300 gelöst. Anschließend können die Glasröhren 110.2, 210.2 aus den Verbindungsmitteln 117, 217 gezogen werden. Das in den Glasröhren 110.2, 210.2 angeordnete Adsorptionsmaterial 120, 220 kann anschließend analysiert werden.

## Patentansprüche

1. Gasentnahmesonde (1), umfassend:
1.1 Eine Gasleitung (10), umfassend einen in der Gasleitung (10) ausgebildeten Gaskanal (15), durch den ein Gas strömbar ist;
1.2 einen Gaseinlass (16), durch den ein Gas in den Gaskanal (15) einleitbar ist;
1.3 ein Adsorptionsmaterial (20), das stromabwärts des Gaseinlasses (16) in dem Gaskanal (15) angeordnet ist;
1.4 ein Ventil (30), durch das der Gaskanal (15) zwischen dem Gaseinlass (16) und dem Adsorptionsmaterial (30) absperrbar ist;
1.5 wobei das Adsorptionsmaterial (20) in einem Abschnitt (10.2) der Gasleitung (10) angeordnet ist, der entnehmbar in der Gasleitung (10) angeordnet ist;
1.6 und wobei die Gasentnahmesonde ferner Heizmittel umfasst, durch die der Abschnitt (10.2) der Gasleitung (10), in der das Adsorptionsmaterial (20) angeordnet ist, beheizbar ist;
**dadurch gekennzeichnet, dass**
1.7 das Adsorptionsmaterial (20) in einem Abschnitt (10.2) der Gasleitung (10) angeordnet ist, der aus Glas ausgebildet ist.

2. Gasentnahmesonde nach Anspruch 1, wobei das Adsorptionsmaterial (20) als Schüttgut ausgebildet ist.

3. Gasentnahmesonde nach wenigstens einem der vorhergehenden Ansprüche, wobei der Gaseinlass (16) an einem Abschnitt (10.1) der Gasleitung (10) angeordnet ist, der zur Anordnung in einem Gas ausgebildet ist.

4. Gasentnahmesonde nach wenigstens einem der vorhergehenden Ansprüche, ferner umfassend ein Befestigungsmittel zur Befestigung der Gasentnahmesonde (1) an einer Wand (70) eines Gasbehälters.

5. Gasentnahmesonde nach Anspruch 4, wobei das Befestigungsmittel derart ausgebildet ist, dass die Gasentnahmesonde (1) über das Befestigungsmittel derart an der Wand (70) befestigbar ist, dass der Abschnitt (10.1) der Gasleitung (10), an dem der Gaseinlass (16) angeordnet ist, innerhalb des Gasbehälters angeordnet ist.

6. Gasentnahmesonde nach wenigstens einem der vorhergehenden Ansprüche, ferner umfassend eine Gaspumpe (40), durch die der Gaskanal (15) mit Unterdruck beaufschlagbar ist, wobei der Gaskanal (15) stromabwärts des Adsorptionsmaterials (20) an die Gaspumpe (40) angeschlossen ist.

7. Gasentnahmesonde nach wenigstens einem der vorhergehenden Ansprüche, ferner umfassend eine Umhüllung, durch die der Abschnitt (10.2) der Gasleitung (10), in der das Adsorptionsmaterial (20) angeordnet ist, zumindest abschnittsweise umhüllbar ist.

8. Gasentnahmesonde nach wenigstens einem der vorhergehenden Ansprüche, ferner umfassend eine Druckmessvorrichtung (50), durch die der Gasdruck im Gaskanal (15) messbar ist.

9. Gasentnahmesonde nach wenigstens einem der vorhergehenden Ansprüche, ferner umfassend eine Durchflussmessvorrichtung (60), durch die der Gasdurchfluss im Gaskanal (15) messbar ist.

10. Gasbehälter, umfassend eine Wand (70), die ein Gas begrenzt, sowie eine Gasentnahmesonde (1) nach wenigstem einem der vorhergehenden Ansprüche, wobei die Gasentnahmesonde (1) an der Wand (70) befestigt ist.

11. Verfahren zur Entnahme einer Gasprobe aus einem Gas in einem Gasbehälter, umfassend die folgenden Schritte:
11.1 Zur Verfügungstellung eines Gasbehälters, umfassend eine Gas begrenzende Wand (70);
11.2 Zur Verfügungstellung einer Gasentnahmesonde (1) nach wenigstens einem der Ansprüche 1 bis 9;
11.3 Befestigung der Gasentnahmesonde an der Wand (70) des Gasbehälters derart, dass der Abschnitt (10.1) der Gasleitung (10), an der der Gaseinlass (16) angeordnet ist, in dem Gas angeordnet ist;
11.4 Leitung des Gases durch den Gaseinlass (16) in den Gaskanal (15) und durch das im Gaskanal (15) angeordnete Adsorptionsmaterial (20).

## Claims

1. A gas sampling probe (1) comprising:
1.1 a gas conduit (10) comprising a gas channel (15) formed in the gas conduit (10), through which a gas is flowable;
1.2 a gas inlet (16) through which a gas can be introduced into the gas channel (15);
1.3 an adsorption material (20) disposed downstream of the gas inlet (16) in the gas channel (15);
1.4 a valve (30) by which the gas channel (15) between the gas inlet (16) and the adsorption material (30) can be shut off;
1.5 wherein the adsorption material (20) is arranged in a section (10.2) of the gas conduit (10) which is removably arranged in the gas conduit (10);
1.6 and wherein the gas sampling probe further comprises heating means by which the section (10.2) of the gas conduit (10) in which the adsorption material (20) is arranged is heatable;
**characterized in that**
1.7 the adsorption material (20) is arranged in a section (10.2) of the gas conduit (10) which is formed of glass.

2. Gas sampling probe according to claim 1, wherein the adsorption material (20) is formed as bulk material.

3. Gas sampling probe according to at least one of the preceding claims, wherein the gas inlet (16) is arranged at a section (10.1) of the gas conduit (10) which is adapted to be arranged in a gas.

4. Gas sampling probe according to at least one of the preceding claims, further comprising a fastening means for fastening the gas sampling probe (1) to a wall (70) of a gas container.

5. Gas sampling probe according to claim 4, wherein the fastening means is designed in such a way that the gas sampling probe (1) can be fastened to the wall (70) via the fastening means in such a way that the section (10.1) of the gas line (10) at which the gas inlet (16) is arranged is arranged inside the gas container.

6. Gas sampling probe according to at least one of the preceding claims, further comprising a gas pump (40) by means of which the gas channel (15) can be subjected to negative pressure, wherein the gas channel (15) is connected to the gas pump (40) downstream of the adsorption material (20).

7. Gas sampling probe according to at least one of the preceding claims, further comprising an enclosure by which the section (10.2) of the gas conduit (10) in which the adsorption material (20) is arranged can be enclosed at least in sections.

8. Gas sampling probe according to at least one of the preceding claims, further comprising a pressure measuring device (50) by means of which the gas pressure in the gas channel (15) can be measured.

9. Gas sampling probe according to at least one of the preceding claims, further comprising a flow measuring device (60) by which the gas flow in the gas channel (15) can be measured.

10. Gas container comprising a wall (70) confining a gas and a gas sampling probe (1) according to at least one of the preceding claims, wherein the gas sampling probe (1) is fixed to the wall (70).

11. Method for taking a gas sample from a gas in a gas container, comprising the following steps:
11.1 providing a gas container comprising a gas confining wall (70);
11.2 providing a gas sampling probe (1) according to at least one of claims 1 to 9;
11.3 attaching the gas sampling probe to the wall (70) of the gas container in such a way that the section (10.1) of the gas line (10) on which the gas inlet (16) is located is located in the gas;
11.4 conducting the gas through the gas inlet (16) into the gas channel (15) and through the adsorption material (20) arranged in the gas channel (15).

## Revendications

1. Sonde de prélèvement de gaz (1), comprenant :
1.1 Une conduite de gaz (10), comprenant une canalisation de gaz (15) conçue dans la conduite de gaz (10), à travers laquelle un gaz peut circuler ;
1.2 une entrée de gaz (16), à travers laquelle un gaz peut être introduit dans la canalisation de gaz (15) ;
1.3 une matière adsorbante (20), qui est placée en aval de l'entrée de gaz (16) dans la canalisation de gaz (15) ;
1.4 une soupape (30), à l'aide de laquelle la canalisation de gaz (15) peut être fermée entre l'entrée de gaz (16) et la matière adsorbante (30) ;
1.5 la matière adsorbante (20) étant placée dans un tronçon (10.2) de la conduite de gaz (10), qui est placé de manière amovible dans la conduite de gaz (10) ;
1.6 et la sonde de prélèvement de gaz comprenant par ailleurs des moyens de chauffage, à l'aide desquels le tronçon (10.2) de la conduite de gaz (10), dans lequel est placé la matière adsorbante (20) peut être chauffé ;
**caractérisée en ce que**
1.7 la matière adsorbante (20) est placée dans un tronçon (10.2) de la conduite de gaz (10) qui est conçu en verre.

2. Sonde de prélèvement de gaz selon la revendication 1, la matière adsorbante (20) étant conçue sous la forme d'un produit en vrac.

3. Sonde de prélèvement de gaz selon au moins l'une quelconque des revendications précédentes, l'entrée de gaz (16) étant placée sur un tronçon (10.1) de la conduite de gaz (10) qui est conçu pour être placé dans un gaz.

4. Sonde de prélèvement de gaz selon au moins l'une quelconque des revendications précédentes, comprenant par ailleurs un moyen de fixation, destiné à fixer la sonde de prélèvement de gaz (1) sur une paroi (70) d'un réservoir de gaz.

5. Sonde de prélèvement de gaz selon la revendication 4, le moyen de fixation étant conçu de telle sorte que la sonde de prélèvement de gaz (1) soit susceptible d'être fixée sur la paroi (70) par l'intermédiaire du moyen de fixation, de telle sorte que le tronçon (10.1) de la conduite de gaz (10), sur lequel est placé l'entrée de gaz (16) soit placé à l'intérieur du réservoir de gaz.

6. Sonde de prélèvement de gaz selon au moins l'une quelconque des revendications précédentes, comprenant par ailleurs une pompe à gaz (40), à l'aide de laquelle la canalisation de gaz (15) peut être soumise à une dépression, la canalisation de gaz (15) étant raccordée sur la pompe à gaz (40) en aval de la matière adsorbante (20).

7. Sonde de prélèvement de gaz selon au moins l'une quelconque des revendications précédentes, comprenant par ailleurs une enveloppe, à l'aide de laquelle le tronçon (10.2) de la conduite de gaz (10), dans lequel est placée la matière adsorbante (20) est susceptible d'être enveloppé au moins par endroits.

8. Sonde de prélèvement de gaz selon au moins l'une quelconque des revendications précédentes, comprenant par ailleurs un dispositif de mesure de la pression (50), à l'aide duquel la pression du gaz dans la canalisation de gaz (15) peut être mesurée.

9. Sonde de prélèvement de gaz selon au moins l'une quelconque des revendications précédentes, comprenant par ailleurs un débitmètre (60), à l'aide duquel le débit de gaz dans la canalisation de gaz (15) peut être mesuré.

10. Réservoir de gaz, comprenant une paroi (70), qui délimite un gaz, ainsi qu'une sonde de prélèvement de gaz (1) selon au moins l'une quelconque des revendications précédentes, la sonde de prélèvement de gaz (1) étant fixée sur la paroi (70).

11. Procédé, destiné à prélever un échantillon de gaz à partir d'un gaz dans un réservoir de gaz, comprenant les étapes suivantes consistant à :
11.1 mettre à disposition un réservoir de gaz, comprenant une paroi (70) délimitant un gaz ;
11.2 mettre à disposition une sonde de prélèvement de gaz (1) selon au moins l'une quelconque des revendications 1 à 9 ;
11.3 fixer la sonde de prélèvement de gaz sur la paroi (70) du réservoir de gaz, de telle sorte que le tronçon (10.1) de la conduite de gaz (10), sur lequel est placée l'entrée de gaz (16) soit placé dans le gaz ;
11.4 diriger le gaz à travers l'entrée de gaz (16) dans la canalisation de gaz (15) et à travers la matière adsorbante (20) placée dans la canalisation de gaz (15).
